# EUROPEAN PATENT SPECIFICATION

(11) **EP 2 559 550 B1**
(45) Date of publication and mention of the grant of the patent: **04.12.2013**
(21) Application number: 11461531.3
(22) Date of filing: 16.08.2011
(51) Int. Cl.: B32B 3/04, B32B 3/06, F16B 19/00

(54) **An insert for a booklet and a method for manufacturing thereof**
Einsatz für eine Broschüre und Herstellungsverfahren dafür
Insert pour livret et son procédé de fabrication

(43) Date of publication of application: 20.02.2013
(73) Proprietor: Polska Wytwornia Papierow Wartosciowych S.A., 00-222 Warszawa (PL)
(72) Inventor: Ragus, Joanna, 00-222 Warszawa (PL); Wojcik, Pawel, 00-222 Warszawa (PL); Supera, Jaroslaw, 00-222 Warszawa (PL); Klus, Jakub, 00-222 Warszawa (PL); Olszynska, Agata, 00-222 Warszawa (PL); Leszczynska-Ambroziewicz, Ewa, 00-222 Warszawa (PL)
(74) Representative: Pawlowski, Adam

(56) References cited:
- EP-A2- 2 116 390
- DE-A1-102004 055 495
- DE-A1-102008 023 411
- GB-A- 1 411 477

## Description

The present invention relates to inserts for booklets, especially for security documents.

A typical security booklet document, such as a passport, comprises a cover, internal paper pages and may comprise a plastic insert. Use of a polymer insert enables use of a microprocessor therein and therefore a link between the personalized data printed and/or engraved on the insert and the personalized data stored in the microprocessor. One of the problems of the booklets with plastic inserts is how to join the plastic insert with the other pages of the booklet.

A European patent EP1812244B1 presents a personal document in book form having a multi-layer personalized page which has a core stratum comprising a textile layer joined with both sides to thermoplastic layers which cover the core stratum up to an excess length, wherein the personalized page is sewn by means of a seam in the area of said excess length with other interior pages and the cover of the book. The layers of the personalized page are joined together by lamination.

A European patent EP1663667B1 presents an inlay sheet for a book-like identification document, having a hinge area, which can be joined to the other parts of the book with a seam along one side in the hinge area and which comprises at least one layer of a thermoplastic elastomer which extends into the hinge area and at least one additional layer which does not extend into the hinge area. The layers are joined together by lamination.

A European patent application EP2116390A2 presents a passport having a plasticized data page and paper sheets connected with each other in a center area to form a bending- or folding edge, wherein a seam is arranged in the area for joining the pages of the passport. The bending- or folding edge is formed by a non-woven strip made of thermoplastic hardened non woven fabric and an edge area of the non-woven strip is arranged in layers of the data page by lamination.

A European patent EP1574359B1 presents a hard laminate sheet for security booklets comprising two inner hard core layers and a flexible component between said inner core layers and extending beyond an outer edge of said inner core layers to form a flexible band, wherein said flexible component comprises a plurality of apertures within which the material of said adjacent inner core layers is laminated together and affixes said flexible component to said laminate sheet.

A European patent EP1878589B1 presents an information page for a security document, the page comprising an information part and an attachment part for attaching said information page to said security document, which is attached to said information part, wherein said attachment part comprises a material having a net-like structure and a support layer which is attached to said material having a net-like structure, wherein the information page comprises a surface layer of a transparent material covering at least a seam between said information part and said attachment part. One advantage is that a forgery attempt to break the seam between the information part and the attachment part is easier to detect, since the seam is visible through the transparent surface layer. The seam is to be understood as a line where the information part and the attachment part have been joined together, while the patent does not specify how the seam is formed. In particular, the patent does not mention stitching by a thread.

Therefore, the known prior art inserts for booklets comprise hard plastic layers and an elastic layer which extends beyond the hard plastic layers, wherein the layers are joined together by lamination only and wherein only the extending elastic layer is stitched together with the other pages of the booklet.

The aim of the present invention is to provide an appropriate construction of the insert for booklets, which provides a reliable and secured joint between the elastic layer and the plastic layers.

The object of the invention is an insert for a booklet, the insert having a form of a multilayer laminate sheet, wherein one internal elastic layer extends beyond the other layers to form an elastic attachment part for attaching the insert to the booklet, wherein the internal elastic layer is joined with at least one other layer of the laminate by at least one coupling element extending through the joined layers, wherein the external surface of the coupling element does not extend above the external surface of the external layers.

Preferably, the internal elastic layer is joined with one or both external layers by at least one coupling element and wherein the external surface of the coupling element is coplanar with the external surface of the one or both external layers.

Preferably, the coupling element is laminated with the one or both external layers.

Preferably, the coupling element is a thread forming a stitch.

Preferably, the coupling element is a rivet.

Preferably, at least one rim of the rivet comprises signs.

Preferably, the signs on the rim of the rivet are personalized.

Preferably, the data defining the signs on the rim of the rivet correspond to personalized data applied on the insert and/or data stored in a microprocessor.

Preferably, the elastic attachment part has signs corresponding to the type of the booklet for which the insert is intended, applied by ink-jet print or by laser cutting.

Preferably, the elastic attachment part has personalized signs corresponding to the data of the other personalized elements of the main portion of the sheet, applied by ink-jet print or by laser cutting.

The object of the invention is also a booklet comprising the insert according to the invention.

The object of the invention is also a method for manufacturing of an insert for a booklet by laminating a plurality of layers of sheets, wherein one internal elastic layer extends beyond the other layers to form an elastic attachment part for attaching the insert to the booklet, comprising the steps of joining the internal elastic layer with at least one of the other layers of the laminate by at least one coupling element extending through the joined layers and then laminating the layers joined with the at least one coupling element in a laminating press such that the external surface of the coupling element does not extend above the external surface of the external layers.

The invention has been shown by means of exemplary embodiments on a drawing, in which:
Fig. 1 shows a first exemplary embodiment of the insert with a stitch,
Fig. 2 shows a second exemplary embodiment of the insert with a stitch,
Fig. 3 shows a third exemplary embodiment of the insert with a stitch,
Fig. 4 shows a fourth exemplary embodiment of the insert with rivets
Fig. 5 shows a fifth exemplary embodiment of the insert with rivets in a top view,
Fig. 6 shows a booklet with the insert,
Fig. 7 shows the steps of the method for manufacturing the insert.

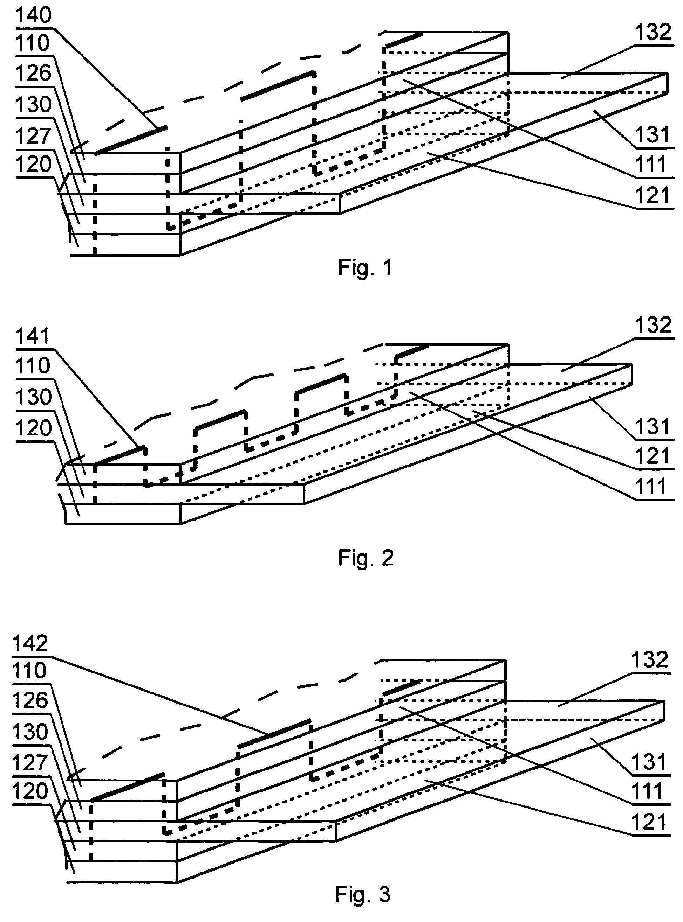

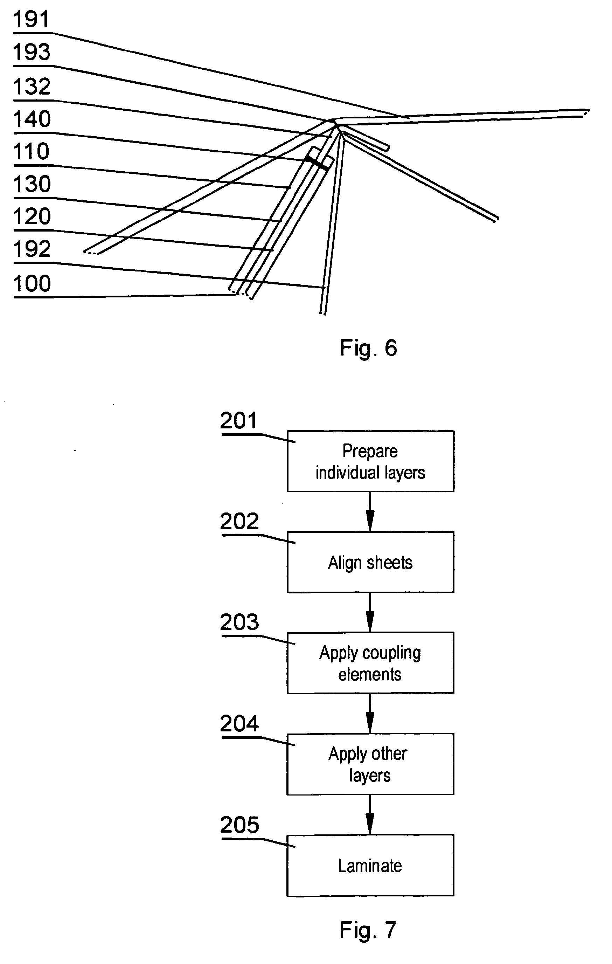

Fig. 1 shows a first exemplary embodiment of the insert for a booklet. The insert has a form of a multilayer sheet having an internal elastic layer 130 placed between layers 126, 127 which can be opaque and covered by transparent external layers 110, 120. One edge 131 of the internal elastic layer 130 extends beyond the edges 111, 121 of the other layers 110, 120, 126, 127 and the extending portion 132 of the internal elastic layer 130 forms an elastic attachment part for attaching the insert to the booklet, as shown in Fig. 6. The internal elastic layer 130 is joined with the other layers 110, 120, 126, 127 by a coupling element, in this example a thread 140 forming a stitch. The external surface of the thread 140 is coplanar with the external surface of the external layers 110, 120, i.e. the thread 140 is melted into the external layers 110, 120.

Fig. 2 shows a second exemplary embodiment of the insert similar to the one shown in Fig. 1, having a smaller number of layers. The internal elastic layer 130 is joined with one external layer 110 by a coupling element, in this example a thread 141 forming a stitch. The external surface of the thread 141 is coplanar with the external surface of the external layer 110, i.e. the thread 141 is melted into the external layer 110, and the thread 141 is covered by the internal surface of the other external layer 120.

Fig. 3 shows a third exemplary embodiment of the insert similar to the one shown in Fig. 1, wherein the internal elastic layer 130 is joined only with the internal layers 126, 127 by a coupling element, in this example a thread 142 forming a stitch. The external surface of the thread 142 is covered by the external layers 110, 120.

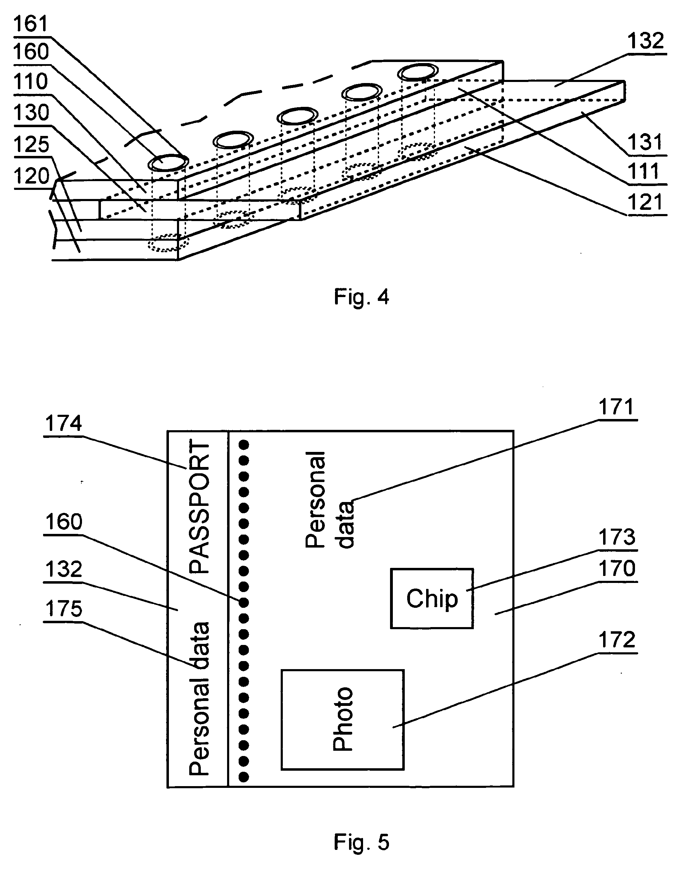

Fig. 4 shows a fourth exemplary embodiment of the insert. The insert comprises external layers 110, 120, an internal layer 125 and an internal elastic layer 130. One edge 131 of the internal elastic layer 130 extends beyond the edges 111, 121 of the other layers 110, 120, 125 and the extending portion 132 of the internal elastic layer 130 forms an elastic attachment part for attaching the insert to the booklet, as shown in Fig. 6. The internal elastic layer 130 is joined with both external layers 110, 120 or with only one of the external layers 110, 120 by coupling elements, in this example a plurality of rivets 160. The external surfaces of the rivets 160 are coplanar with the external surfaces of the external layers 110, 120, i.e. the rivets 160 are melted into the external layers 110, 120. The rim 161 of the rivet may comprise signs, in form of laser etched or stamped letters, numbers and/or symbols, which can be personalized for the particular insert.

Fig. 5 shows a fifth exemplary embodiment of the insert with rivets in a top view. In the main portion 170 of the sheet, the insert has personalized data in form of signs 171, a photograph 172 and/or digital data stored in a microprocessor (chip) 173, applied in a conventional manner. In addition, the elastic attachment part may comprise signs 174 corresponding to the type of a booklet for which the insert is intended, applied by ink-jet print or by laser cutting. Moreover, the elastic attachment part 132 may comprise personalized signs 175 corresponding to the data of the other personalized elements 171, 172, 173 on the main portion of the sheet, applied by ink-jet print or by laser cutting. The data defining the sings on the rim 161 of the rivet 160 may be further stored in the microprocessor 173 within the insert. These security features facilitate detection of manipulation within the region of the elastic attachment part.

The layers 110, 120, 125, 126, 127 can be made of the same or different materials, such as polycarbonate (PC), polyethylene terephthalate (PET), polyvinyl chloride (PVC), polyethylene chlorinate (PEC) or other composites. The internal elastic layer 130 can have a net-like structure and can be made of synthetic or natural material. The internal elastic layer 130 can extend over the whole area of the other layers as shown in Fig. 1, 2 and 3 or can extend only over a part of the area of the other layers as shown in Fig. 4.

The thread 140 forming the stitch can be made of synthetic or natural material and can itself be a security element, such as a thread of variable visibility in different light wavelengths, a multi-colour thread, a thread which loses colour under certain conditions. The stitch can be a straight stitch, as shown in Fig. 1, 2 and 3 which runs to the other side of the insert for example every 3 mm. Shorter or longer stitches, as well as more sophisticated shapes and types of the stitches, such as chain stitches, can be used as well. The stitch does not have to run along a straight line.

The rivets can be made of metal, preferably Cu, Ag, Au. The rivets may have a diameter of about 2 mm and the width of the rim of about 2 mm. The rivets can be distributed at a distance of about 5 mm from each other. Smaller or larger rivets, distanced less or more densely, can be used as well. The rivers do not have to be arranged along a straight line.

The coupling elements are preferably distributed near the edges 111, 121 close to the attachment part 132, which guarantees firm attachment of this edge of the insert.

Fig. 6 shows a booklet with the insert. The booklet comprises a cover 191, the insert 100 and other pages 192, which are joined together, for example by a stitch made by a thread 193 along the back of the booklet.

Fig. 7 shows the steps of the method for manufacturing the insert. First, in step 201, the individual layers are prepared. This step may involve for example printing of the layers. Next, in step 202, at least the internal elastic sheet 130 and at least one internal sheet are aligned on top of each other. Then, in step 203, the coupling elements are applied to the sheets, for example by sewing the thread 140, 141, 142 or by punching holes in the layers and inserting rivets 160 therein. Next, in step 204, the external layers 110, 120 are applied in case they have not been aligned in step 202. After that, the sheets are inserted into the laminating press in step 205, wherein the layers are joined by high temperature and high pressure. Before the lamination, the external surface of the coupling elements may extend above the external surface of the external layers. During the lamination, the coupling elements become pressed and thereby deformed together with the external layer such that their external surface does not extend above the external surface of the external layers. In case when in step 202 the coupling elements passed through the external layer, the external surface of the coupling elements becomes coplanar with the external surface of the external layers. After that, the other processing steps can be applied to the laminate, such as cutting a larger sheet to smaller sheets, laser engraving of the insert or the rivets, stamping (e.g. to stamp micro signs on the rims of the rivets) etc.

Due to the fact that the external surface of the coupling elements does not extend above the external surface of the external layers, the coupling elements are hard to remove, as they are firmly connected with the laminate layers. Even if the coupling elements were removed at the attempt of forgery, it would be hard to replace them with new elements, as the new elements would have to perfectly match the shape of the removed elements. The integrity of the insert, which should have a perfectly smooth surface, is therefore easy to check by eyesight or by touch.

## Claims

1. An insert for a booklet, the insert having a form of a multilayer laminate sheet, wherein one internal elastic layer (130) extends beyond the other layers (110, 120, 125, 126, 127) to form an elastic attachment part (132) for attaching the insert to the booklet, **characterized in that** the internal elastic layer (130) is joined with at least one other layer of the laminate by at least one coupling element (140, 141, 142, 160) extending through the joined layers, wherein the external surface of the coupling element (140, 141, 142, 160) does not extend above the external surface of the external layers (110, 120).

2. The insert according to claim 1, wherein the internal elastic layer (130) is joined with one or both external layers (110, 120) by at least one coupling element (140, 141, 160) and wherein the external surface of the coupling element (140, 141, 160) is coplanar with the external surface of the one or both external layers (110, 120).

3. The insert according to any of previous claims, wherein the coupling element (140, 141, 142, 160) is laminated with the one or both external layers (110, 120).

4. The insert according to any of previous claims, wherein the coupling element is a thread (140, 141, 142) forming a stitch.

5. The insert according to any of previous claims, wherein the coupling element is a rivet (160).

6. The insert according to claim 5, wherein at least one rim (161) of the rivet (160) comprises signs.

7. The insert according to claim 6, wherein the signs on the rim (161) of the rivet (160) are personalized.

8. The insert according to claim 7, wherein the data defining the signs on the rim (161) of the rivet (160) correspond to personalized data applied on the insert and/or data stored in a microprocessor (173).

9. The insert according to any of previous claims, wherein the elastic attachment part (132) has signs (174) corresponding to the type of the booklet for which the insert is intended, applied by ink-jet print or by laser cutting.

10. The insert according to any of previous claims, wherein the elastic attachment part (132) has personalized signs (175) corresponding to the data of the other personalized elements (171-173) of the main portion (170) of the sheet, applied by ink-jet print or by laser cutting.

11. A booklet comprising the insert according to any of previous claims.

12. A method for manufacturing of an insert for a booklet by laminating a plurality of layers of sheets (110, 120, 125, 126, 127, 130), wherein one internal elastic layer (130) extends beyond the other layers (110, 120, 125, 126, 127) to form an elastic attachment part (132) for attaching the insert to the booklet, **characterized by** joining the internal elastic layer (130) with at least one of the other layers of the laminate by at least one coupling element (140, 141, 142, 160) extending through the joined layers and then laminating the layers joined with the at least one coupling element (140, 141, 142, 160) in a laminating press such that the external surface of the coupling element (140, 141, 142, 160) does not extend above the external surface of the external layers (110, 120).

## Patentansprüche

1. Einlage für ein Büchlein, wobei die Einlage eine Form eines mehrschichtigen Laminatbogens aufweist, wobei sich eine innere elastische Schicht (130) über die anderen Schichten (110, 120, 125, 126, 127) hinaus erstreckt, um einen elastischen Befestigungsteil (132) zu bilden, um die Einlage am Büchlein zu befestigen, **dadurch gekennzeichnet, dass** die innere elastische Schicht (130) durch mindestens ein Kopplungselement (140, 141, 142, 160), das sich durch die verbundenen Schichten erstreckt, mit mindestens einer anderen Schicht des Laminats verbunden ist, wobei sich die Außenfläche des Kopplungselements (140, 141, 142, 160) nicht über der Außenfläche der äußeren Schichten (110, 120) erstreckt.

2. Einlage nach Anspruch 1, wobei die innere elastische Schicht (130) durch mindestens ein Kopplungselement (140, 141, 160) mit einer oder beiden äußeren Schichten (110, 120) verbunden ist und wobei die Außenfläche des Kopplungselements (140, 141, 160) koplanar mit der Außenfläche der einen oder beiden äußeren Schichten (110, 120) ist.

3. Einlage nach einem der vorhergehenden Ansprüche, wobei das Kopplungselement (140, 141, 142, 160) mit der einen oder den beiden äußeren Schichten (110, 120) laminiert ist.

4. Einlage nach einem der vorhergehenden Ansprüche, wobei das Kopplungselement ein Faden (140, 141, 142) ist, der eine Naht bildet.

5. Einlage nach einem der vorhergehenden Ansprüche, wobei das Kopplungselement eine Niete (160) ist.

6. Einlage nach Anspruch 5, wobei mindestens eine Randlippe (161) der Niete (160) Zeichen umfasst.

7. Einlage nach Anspruch 6, wobei die Zeichen der Randlippe (161) der Niete (160) personalisiert sind.

8. Einlage nach Anspruch 7, wobei die Daten, welche die Zeichen auf der Randlippe (161) der Niete (160) definieren, den Personendaten entsprechen, die auf die Einlage aufgebracht sind, und/oder Daten, die in einem Mikroprozessor (173) gespeichert sind.

9. Einlage nach einem der vorhergehenden Ansprüche, wobei der elastische Befestigungsteil (132) Zeichen (174) aufweist, die der Art des Büchleins entsprechen, für das die Einlage vorgesehen ist, und die durch Tintenstrahldruck oder durch Laserschneiden aufgebracht sind.

10. Einlage nach einem der vorhergehenden Ansprüche, wobei der elastische Befestigungsteil (132) personalisierte Zeichen (175) aufweist, die den Daten der anderen personalisierten Elemente (171-173) des Hauptabschnittes (170) des Bogens entsprechen, die durch Tintenstrahldruck oder Laserschneiden aufgebracht sind.

11. Büchlein, die Einlage nach einem der vorhergehenden Ansprüche umfassend.

12. Verfahren zum Herstellen einer Einlage für ein Büchlein durch Laminieren mehrerer Schichten von Bögen (110, 120, 125, 126, 127, 130), wobei sich eine innere elastische Schicht (130) über die anderen Schichten (110, 120, 125, 126, 127) hinaus erstreckt, um einen elastischen Befestigungsteil (132) zum Befestigen der Einlage am Büchlein zu bilden, **gekennzeichnet durch** Verbinden der inneren elastischen Schicht (130) mit mindestens einer der anderen Schichten des Laminats **durch** mindestens ein Kopplungselement (140, 141, 142, 160), das sich **durch** die verbundenen Schichten erstreckt, und dann Laminieren der Schichten, die mit dem mindestens einen Kopplungselement (140, 141, 142, 160) verbunden sind, in einer Laminierpresse derart, dass sich die Außenfläche des Kopplungselements (140, 141, 142, 160) nicht über der Außenfläche der äußeren Schichten (110, 120) erstreckt.

## Revendications

1. Intercalaire pour livret, cette intercalaire ayant la forme d'un feuillet laminé multicouche, dans lequel une couche élastique interne (130) s'étend au-delà des autres couches (110, 120, 125, 126, 127) pour former une pièce de fixation élastique (132) destinée à fixer l'intercalaire au livret, **caractérisé en ce que** la couche élastique interne (130) est assemblée à au moins une autre couche du laminé par au moins un élément de couplage (140, 141, 142, 160) s'étendant dans les couches assemblées, la surface externe de l'élément de couplage (140, 141, 142, 160) ne s'étendant pas sur la surface externe des couches externes (110, 120).

2. Intercalaire selon la revendication 1, dans lequel la couche élastique interne (130) est assemblée à une ou deux des couches externes (110, 120) par au moins un élément de couplage (140, 141, 160) et la surface externe de l'élément de couplage (140, 141, 160) est coplanaire avec une ou les deux des couches externes (110, 120).

3. Intercalaire selon l'une quelconque des revendications précédentes, dans lequel l'élément de couplage (140, 141, 142, 160) est laminé avec une ou deux des couches externes (110, 120).

4. Intercalaire selon l'une quelconque des revendications précédentes, dans lequel l'élément de couplage est un fil (140, 141, 142) formant une broderie.

5. Intercalaire selon l'une quelconque des revendications précédentes, dans lequel l'élément de couplage est un rivet (160).

6. Intercalaire selon la revendication 5, dans lequel au moins un bord (161) du rivet (160) comporte des signes.

7. Intercalaire selon la revendication 6, dans lequel les signes du rebord (161) du rivet (160) sont personnalisés.

8. Intercalaire selon la revendication 7, dans lequel les données définissant les signes du rebord (161) du rivet (160) correspondent à des données personnalisées appliquées à l'intercalaire et/ou aux données sauvegardées dans un microprocesseur (173).

9. Intercalaire selon l'une quelconque des revendications précédentes, dans lequel la pièce de fixation élastique (132) comporte des signes (174) correspondant au type de livret auquel l'intercalaire est destinée et appliqués par impression au jet d'encre ou découpe au laser.

10. Intercalaire selon l'une quelconque des revendications précédentes, dans lequel la pièce de fixation élastique (132) comporte des signes personnalisés (175) correspondant aux données des autres éléments personnalisés (171-173) de la partie principale (170) du feuillet et appliqués par impression au jet d'encre ou découpe au laser.

11. Livret comprenant l'intercalaire selon l'une quelconque des revendications précédentes.

12. Procédé de fabrication d'un intercalaire pour livret en laminant une pluralité de couches de feuillets (110" 120, 125, 126, 127, 130), dans lequel une couche élastique interne (130) s'étend au-delà des autres couches (110, 120, 125, 126, 127) pour former une pièce de fixation élastique (132) destinée à fixer l'intercalaire au livret, **caractérisé par** l'assemblage de la couche élastique interne (130) à au moins une des autres couches du laminé par au moins un élément de couplage (140, 141, 142, 160) s'étendant dans les couches assemblées puis le laminage des couches assemblées par l'au moins un élément de couplage (140, 141, 142, 160) dans une presse de laminage de manière à ce que la surface externe de l'élément de couplage (140, 141, 142, 160) ne s'étende pas au-delà de la surface externe des couches externes (110, 120).
